# EUROPEAN PATENT SPECIFICATION

(11) **EP 2 360 987 B1**
(45) Date of publication and mention of the grant of the patent: **20.04.2016**
(21) Application number: 10290066.9
(22) Date of filing: 12.02.2010
(51) Int. Cl.: H04M 1/725, H04W 12/06, H04L 29/06, H04W 88/04, H04W 88/06

(54) **Device and method for coupling a cellular telecommunication device to an NFC terminal**
Vorrichtung und Verfahren zur Anbindung eines Mobilfunkendgeräts an ein NFC Terminal
Dispositif et procédé de couplage d' un dispositif mobile au terminal NFC

(43) Date of publication of application: 24.08.2011
(73) Proprietor: Morpho Cards GmbH, 24220 Flintbek (DE); STMicroelectronics (Rousset) SAS, 13790 Rousset (FR); Simlink AS, 7004 Trondheim (NO)
(72) Inventor: Cricco, Remy, 13180 Gignac La Nerthe (FR)
(74) Representative: Richardt Patentanwälte PartG mbB

(56) References cited:
- EP-A1- 1 914 954
- WO-A1-2006/137740
- Heikki Ailisto, Tapio Matinmikko: "Physical browsing with NFC technology" VTT Research Note 1 August 2007 (2007-08-01), pages 1-72, XP002586911 Retrieved from the Internet: URL:http://www.vtt.fi/inf/pdf/tiedotteet/2 007/T2400.pdf> [retrieved on 2010-06-10]
- ANONYMOUS: "Bluetooth enabled SIM-card" RESEARCH DISCLOSURE, MASON PUBLICATIONS, HAMPSHIRE, GB, vol. 439, no. 6, 1 November 2000 (2000-11-01), XP007127047 ISSN: 0374-4353

## Description

### Field of the invention

The present invention relates to the field of cellular mobile telecommunication, and more particularly to the coupling of a cellular mobile telecommunication device, such as a so called cell phone, to a NFC terminal.

### Background and reflated art

Cellular mobile telecommunication devices that enable the use of telecommunication services provided by a cellular mobile telecommunication network, such as a GSM or UMTS network, are as such known. Such cellular mobile telecommunication devices can be implemented as so called cellular phones, smart phones or the like. It is also known from the prior art that cellular mobile telecommunication devices have an integrated chip card reader for reading a so called SIM card or USIM card.

US 2008/0081631 A1 shows a cell phone having integrated near field communication (NFC) and wireless local area network (WLAN) interfaces.

Document "Physical browsing with NFC technology", Heikki Ailisto, Tapio Matinmikko: VTT Research Note, shows NFC applications using mobile phones, thereby disclosing inter-alia the provision of a Buetooth-NFC gateway, which can be implemented as a key pendant for accessing an NFC server by a mobile device not supporting NFC.

### Summary of the invention

It is an object of the present invention to provide a communication component, a wireless communication system and a method for coupling a cellular mobile telecommunication device to an NFC terminal as described by the subject matter of the independent claims.

Embodiments of the present invention are particularly advantageous as the communication component enables to couple a legacy cell phone or an inexpensive type of cell phone that has only an air interface to the cellular mobile telecommunication network but no additional wireless communication interface to an NFC terminal. As a consequence the user of the cell phone has access to various NFC applications using his or her cell phone that does not have an integrated NFC or other short range interface. This is made possible by a communication component that converts WLAN signals to NFC signals and vice versa, and by the insertion of a telecommunication chip card, e.g. a SIM card or a secure MicroSD card or a secure dongle, that has an integrated WLAN transceiver for enabling the cell phone to communicate with the communication component.

A 'telecommunication chip card' as understood herein is any integrated circuit chip card that has storage for storing access data that enable the coupling of a cellular telecommunication device with a respective network when the telecommunication chip card is inserted in a chip card reader of the telecommunication device. The telecommunication chip card may have an integrated processor for execution of an application program. In the case of a SIM card or a USIM card the processor may be operable to execute a set of commands that constitute the SIM application toolkit or any Java card applet manager program. In particular files, such as program files or application programs, in a SIM or USIM card can be remotely managed by means of over the air (OTA) technology; in particular OTA enables to download application programs dynamically via the air interface of the cell phone from an OTA-server that is coupled to the digital cellular mobile telecommunication network.

The term 'near field communication' or NFC as understood herein is a short-range high frequency wireless communication technology that enables the exchange of data between devices over about a 10 cm distance. NFC enables communication such as with existing ISO/IEC14443, ISO 18092, ETSI TS 102613 Single Wire Protocol (SWP) Standard, ETSI TS 102622 Host Controller Interface (HCl) Standard smart cards and terminals and is thereby compatible with existing contactless infrastructure already in use for public transportation and payment, such as for electronic ticketing, mobile payment, mobile commerce or electronic key applications.

Instead of a WLAN another far field telecommunication standard can be utilized for the communication between the communication component and the telecommunication chip card of the cellular mobile telecommunication device. The term 'far field communication' as understood herein encompasses any telecommunication method that utilizes the electromagnetic far field for exchanging information. In particular Bluetooth, Zigbee can be used for the far field communication.
For example, the communication component is a chip card, in particular a so called smart card, into which the various functional components of the communication component are integrated. In accordance with an embodiment of the invention, the communication component has an integrated reader for a separate security token, such as a SIM card reader for inserting a SIM card into the communication component.

In accordance with an embodiment of the invention, the communication component or the security token has processor means for execution of an application program module. The application program module may be interoperable with another application program module that is executed by the telecommunication chip card of the cellular mobile telecommunication device. In particular, the application program module of the communication component or the security token may remotely control the application program module of the cellular mobile telecommunication device for distributed processing and/or for obtaining access to functionalities of the telecommunication chip card and/or the cellular mobile telecommunication device that are not available in the communication component, such as the user interface of the cellular mobile telecommunication device and its air interface.

In accordance with an embodiment of the invention, the communication component has a SIM card reader into which a single wire protocol (SWP) SIM card is inserted. Thereby the security of the wireless communication system can be improved. For example, an asymmetric cryptographic key pair can be stored both in the SWP SIM card of the communication component and the WLAN SIM card of the cellular mobile telecommunication device for authentication and/or encryption of the communication between the communication component and the cellular mobile telecommunication device and/or the NFC terminal.

In accordance with an embodiment of the invention the communication component is a sticker or label. The sticker carries the various elements of the communication component, such as the WLAN transmitter/receiver (transceiver), the NFC transceiver and the converter means and may be attached to any object. For example, the user may attach the sticker to the back of the cellular phone, to his or her purse or another object that the user usually carries with him or her.

In accordance with an embodiment of the invention, the sticker has a self-adhesive foil to which the WLAN transceiver, the NFC transceiver and the converter means are attached. In addition, a battery may be attached to the self-adhesive foil. The WLAN transceiver, the NFC transceiver and the converter means may be implemented in a single integrated circuit chip. The battery can be a foil battery such that the communication component is formed as a substantially flat structure that has a maximum thickness of less than 5 mm. Preferably the maximum thickness of the sticker is below 4 mm or 3 mm. This has the advantage of maximum convenience as use of the object to which the sticker is attached is not obstructed in any way by the presence of the attached sticker.

In accordance with an embodiment of the invention, the communication component is formed as a keyring pendant. The user may add the keyring pendant to his or her keyring or a fob, i.e. a chain or ribbon by which the keyring pendant is attached to a waistcoat or another item of clothing.

For example, the communication component is a chip card, in particular a smart card.

In another aspect the present invention relates to a wireless communication system comprising a cellular mobile telecommunication device having an integrated chip card reader, a telecommunication chip card for insertion into the chip card reader, the telecommunication chip card having an integrated WLAN transceiver, a communication component, the WLAN transceiver of the communication component being operable to exchange the WLAN signals with the integrated WLAN transceiver of the telecommunication chip card.

Embodiments of the invention are advantageous as well in the sense that this wireless communication system offers the same level of security than embedded NFC mobile phones, particularly for secure contactless application hosted in SWP SIM cards.

Another advantage of the wireless communication system as claimed is that the communication component is able to support NFC functionalities hosted by the cellular phone SIM card, including reader modes and card modes (battery on and battery off), allowing secured 'off-line' services.

In accordance with an embodiment of the invention, the telecommunication chip card executes an application program, such as an applet, in particular a JavaCard applet. The application program exchanges information with the NFC terminal using the integrated WLAN transceiver of the telecommunication chip card and the communication component.

In accordance with an embodiment of the invention, the application program, such as a JavaCard applet, can be downloaded to the cellular mobile telecommunication device from the cellular digital mobile telecommunication network. This can be implemented using over the air (OTA) technology.

For example, an OTA server is coupled to the cellular digital mobile telecommunication network. The OTA server provides the application program for transmission to the cellular mobile telecommunication device via the cellular mobile telecommunication network. The transmission of the application program can be implemented by means of a push or pull service.

Embodiments of the invention are particularly advantageous as the user can upgrade his or her existing cellular phone by replacing the phone's regular SIM card by a SIM card having an integrated WLAN transceiver. Depending on the user's requirements one or more application programs may then be downloaded via the cellular mobile telecommunication network and stored in the SIM card. In combination with an embodiment of the communication component of the invention the user is thus provided with the capability to use various NFC applications, such as electronic ticketing, payment applications and the like, without having to purchase a new cellular phone that has an integrated NFC interface.

In accordance with an embodiment of the invention, the NFC terminal constitutes a power supply for the communication component. For example, electrical power is inductively coupled into the communication component to provide a power supply for the various functional elements of the communication component.

In still another aspect the invention relates to a communication method for coupling a cellular mobile telecommunication device to an NFC terminal using a communication component, the method comprising the steps of: providing a power to the communication component by inductive coupling using the NFC transceiver, receiving a first WLAN signal carrying first information from the integrated WLAN transceiver of the telecommunication chip card of the cellular mobile telecommunication device by the communication component, generating a first NFC signal carrying the first information and sending the first NFC signal from the NFC transceiver of the communication component to the NFC terminal, receiving a second NFC signal from the NFC terminal by the NFC transceiver of the communication component, the second NFC signal carrying a second information, generating a second WLAN signal carrying the second information and sending the second WLAN signal from the communication component to the integrated WLAN transceiver of the telecommunication chip card, and providing a reader into which a security token, such as a SIM card, is inserted, the security token having a storage for storing a symmetric key or an asymmetric cryptographic key pair; authenticating and encrypting the communication between the communication component and the cellular mobile telecommunication device and the NFC terminal using a the symmetric key or thean asymmetric cryptographic key pair.

For example, the telecommunication chip card has a processor executing an application, the processor being coupled to the integrated far field transceiver of the telecommunication chip card, the application being configured to perform the method further comprising: generating the first information by the application program and inputting the first information into the integrated far field transceiver for sending the first far field signal carrying the first information to the communication component, inputting the second information from the integrated far field transceiver into the processor for processing of the second information by execution of the application program.

In accordance with an embodiment of the invention, the method further comprises receiving the application program via an air interface of the cellular mobile telecommunication device from an OTA server.

For example, the telecommunication chip card of the cellular mobile telecommunication device comprises a first application program configured to perform a method comprising the steps of:
- transmitting via the far field transceiver of the telecommunication chip card a first request for establishing a secure communication channel with a second communication device;
- in response to a confirmation signal from the second communication device, establishing a secure communication channel with the second communication device;
- receiving over the secure communication channel a second request for establishing a secure return channel to the OTA server through the telecommunication chip card of the cellular mobile telecommunication device; and
- establishing the secure return channel between the second communication device and the OTA server.

For example, information sent over the secure return channel is encrypted at the second communication device and decrypted at the OTA server.

In accordance with an embodiment of the invention, the second request comprises information received from an NFC terminal via the second communication device.

In accordance with an embodiment of the invention, the second request is received via the far field transceiver of the telecommunication chip card.

In accordance with an embodiment of the invention, the second communication device is the communication component described herein.

For example, the second communication device is a second cellular mobile telecommunication device comprising a far field transceiver for exchanging far field signals, an NFC transceiver for exchanging NFC signals, and converter means for converting a received far field signal to an NFC signal and for converting a received NFC signal to a far field signal.

For example, the method of the first application program further comprises searching for the second communication device using the far field transceiver of the telecommunication chip card, and upon finding the second communication device, transmitting the first request.

For example, the method of the first application program further comprises receiving a first identity from the OTA server, the searching comprising listening to broadcast messages sent from a far field transceiver of the second communication device, and the finding comprising detecting a correspondence of an identity broadcasted by the far field transceiver of the second communication device with the first identity received from the OTA server, the identity being for example a BSSID.

For example, the first application program is received from the OTA server. For example, the first application program is received from the OTA server over a secure channel in response to the second communication device establishing contact with an NFC terminal, the NFC terminal being communicatively coupled with the OTA server. This triggering may be initiated by the user, the operator or from a trusted internet application.

For example, the method of the first application program further comprises receiving a second application program from the OTA server and forwarding over the trusted channel the second application program for installation at the second communication device.

### Brief description of the drawings

In the following preferred embodiments of the invention will be described in greater detail by way of example only making reference to the drawings in which:
- Figure 1: shows a block diagram of an example of a wireless communication system,
- Figure 2: is illustrative of a further embodiment of the invention,
- Figure 3: is a block diagram of a further embodiment of the communication component of the invention,
- Figure 4: shows a block diagram of a further embodiment of a wireless communication system of the invention.

### Detailed description

In the following like elements of the various embodiments are designated by identical reference numerals.

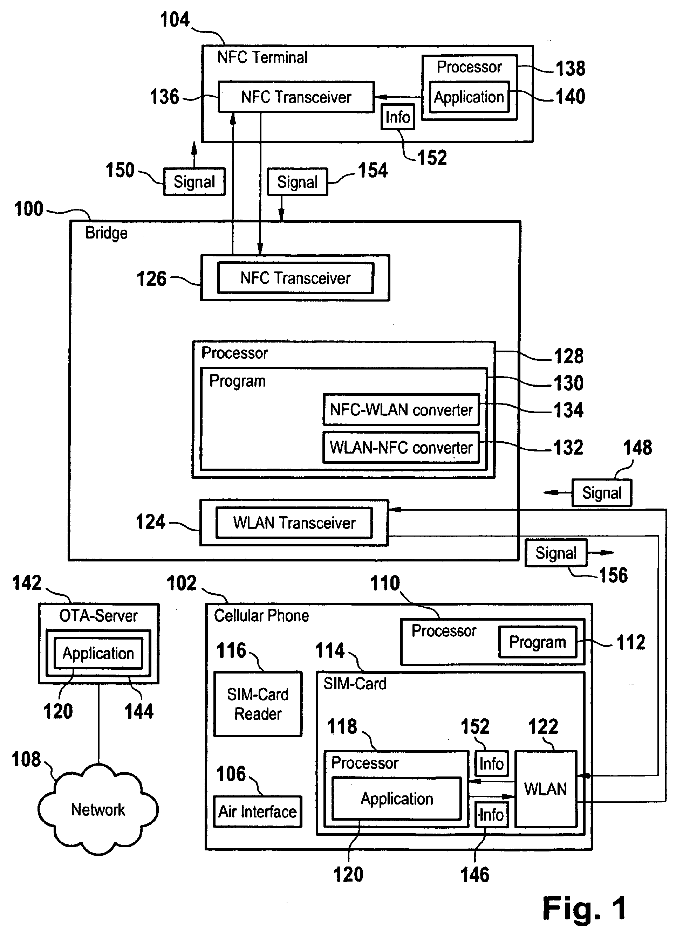

Fig. 1 shows a communication component 100 that serves as a communication bridge between a cellular phone 102, such as a GSM or UMTS phone, and an NFC terminal 104.

The cellular phone 102 has an air interface 106 that comprises an antenna and a transceiver for coupling the cellular phone 102 to a cellular mobile telecommunication network 108, such as a GSM or UMTS network.

The cellular phone 102 has at least one processor 110 for execution of program instructions 112. The operation of the cellular phone 102 is controlled by execution of the program instructions 112, in particular regarding the exchange of voice data and other data via the air interface 106 and regarding the data exchange with a SIM card 114 that is inserted into a SIM card reader 116 of the cellular phone 102. Further, a user interface to a user of the cellular phone 102 is provided by means of the program instructions 112 that can receive user commands and data such as from a keyboard of the cellular phone 102 and control a display of the cellular phone 102 for displaying information.

The SIM card 114 comprises processor 118 for execution of at least one application program 120. For example, the application program 120 can be implemented by an applet, in particular a JavaCard applet.

Furthermore, the SIM card 114 comprises an integrated WLAN transceiver 122 that is coupled to the processor 118 for exchanging information with the application program 120. The WLAN transceiver 122 is coupled to a WLAN antenna 188 that is forming an integral part of the SIM Card 114. The WLAN transceiver can be in compliance with IEEE 802.11. Alternatively the transceiver 122 can implement another standard such as Zigbee (IEEE 802.15). Alternatively other frequencies or protocols can be implemented by the transceivers 122 and 124, in particular Bluetooth,...

The communication component 100 comprises a WLAN transceiver 124 for exchanging WLAN signals with the WLAN transceiver 122 of the SIM card 114. In addition, the communication component 100 comprises an NFC transceiver 126 for exchanging NFC signals with the NFC terminal 104. The communication component 100 has a processor 128 for execution of program instructions 130 that implement a WLAN to NFC converter 132 as well as an NFC to WLAN converter 134.

For example, the communication component 100 comprises an integrated WLAN antenna 184 that is coupled to the WLAN transceiver 124 and/or an integrated NFC antenna 186 that is coupled to the NFC transceiver 126.

The converter 132 serves to convert a WLAN signal received by the WLAN transceiver 124 into an NFC signal carrying the same information and sending the NFC signal via the NFC transceiver 126 to the NFC terminal 104. Likewise, the converter 134 serves to convert an NFC signal received from the NFC terminal 104 by the NFC transceiver 126 into a WLAN signal carrying the same information as that received by the NFC signal and for sending the resultant WLAN signal via the WLAN transceiver 124 to the cellular phone 102.

The NFC terminal 104 has an NFC transceiver 136 for exchanging the NFC signals with the NFC transceiver 126 of the communication component 100. Further, the NFC terminal 104 comprises at least one processor 138 for execution of an application program 140. For example, the application program 140 implements an electronic ticketing application, a payment application or another NFC application that is made accessible to the user of the cellular phone 102 through the communication component 100.

In one implementation an OTA-server 142 is coupled to the network 108. The OTA-server has storage 144 for storing the application program 120 and for providing the application program 120 for transmission via the network 108 to the cellular phone 102.

For usage of the service provided by the application program 140 the following steps can be performed:
1. The SIM card 114 is inserted into the SIM card reader 116 of the cellular phone 102. It is to be noted that the cellular phone 102 does not require a communication interface in addition to the air interface 106 as such an additional communication interface is provided by the SIM card 114 that has the integrated WLAN transceiver 122. The WLAN transceiver 122 has the advantage that it uses an electromagnetic far field for exchanging WLAN signals with the WLAN transceiver 124 of the communication component 100 which are not shielded by conducting components of the cellular phone 102.
2. Depending on the implementation the application program 120 is already stored on the SIM card 114 when it is delivered to the user of the cellular phone 102. Alternatively the application program 120 is provided to the SIM card 114 from the OTA-server 142 by transmitting the application program 120 via the network 108 and the air interface 106 of the cellular phone 102 to the SIM card 114. This provides an utmost degree of flexibility to the user as the user can select the application program 120 depending on his or her requirements, download an upgrade of the application program 120 from the OTA-server 142 or download additional application programs from the OTA-server 142 for using various NFC applications. In particular, the application programs provided by the OTA-server 142 may be JavaCard applets that are stored on the SIM card 114 for execution by the processor 118.
3. For use of the services provided by the application program 140, the application program 120 generates information such as in response to a user input received via a keyboard of the cellular phone 102. The information 146 is transmitted from the processor 118 to the integrated WLAN transceiver 122. In response, the integrated WLAN transceiver 122 generates a WLAN signal 148 that is received by the WLAN transceiver 124 of the communication component 100.
4. In response to receipt of the WLAN signal 148 the converter 132 of the communication component 100 generates an NFC signal 150 that contains the information 146 carried by the WLAN signal 148. The resultant NFC signal 150 is transmitted from the NFC transceiver 126 to the NFC transceiver 136 of the NFC terminal 104. The NFC transceiver 136 enters the information 146 carried by the signal 150 into the application program 140 for processing. As a result of the processing, the application program 140 outputs information 152 to the NFC transceiver 136. In response the NFC transceiver 136 generates an NFC signal 154 that is received by the NFC transceiver 126. In response to receipt of the NFC signal 154 the converter 134 generates a WLAN signal 156 that carries the information 152 received with the NFC signal 154. The WLAN signal 156 is received by the integrated WLAN transceiver 122 of the SIM card 114. The information 152 carried by the WLAN signal 156 is then forwarded from the WLAN transceiver 122 to the processor 114 for processing by the application program 120. As a result of the processing of the information 152 by the application program 120 the application program 120 may output data via the SIM card reader 116 for display on a display of the cellular phone 102. As a consequence bi-directional information exchange between the cellular phone 102 and the NFC terminal 104 is enabled.

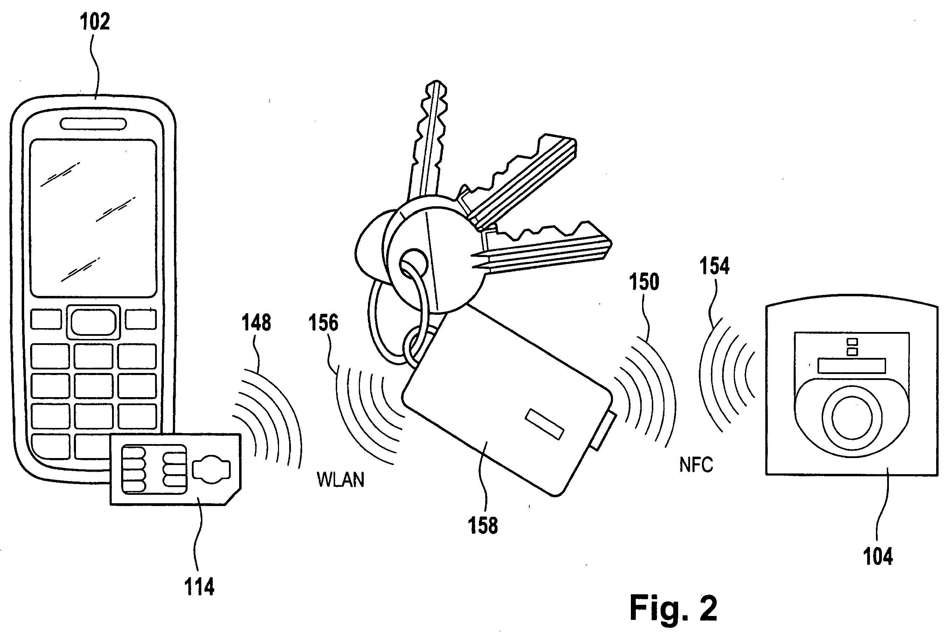

Fig. 2 illustrates an embodiment of the invention, where the communication component 100 is implemented as a keyring pendant 158 that is carried by the user of the cellular phone 102.

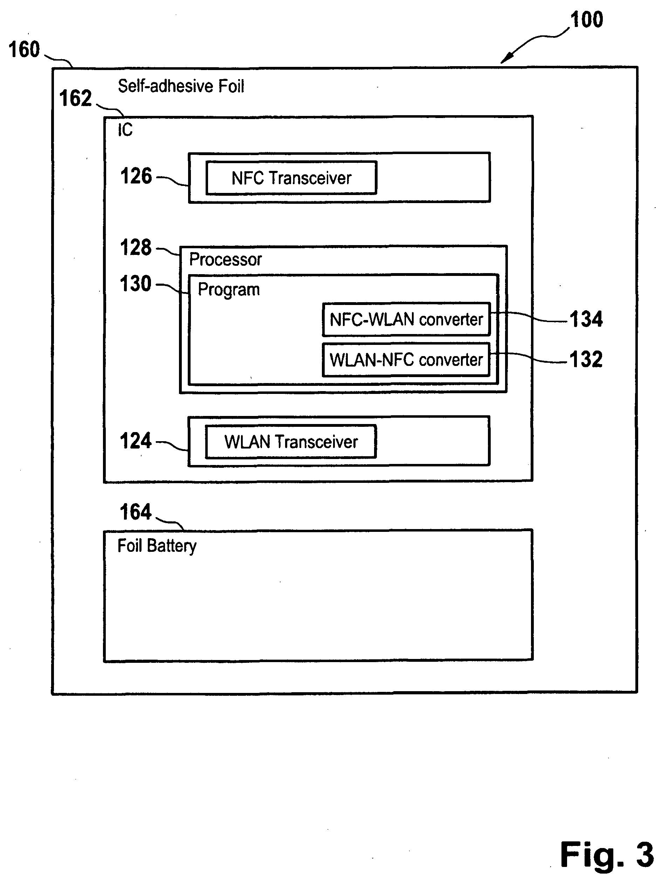

Fig. 3 illustrates a further embodiment of the communication component 100. In the embodiment considered here the communication component 100 comprises a self-adhesive foil 160 that carries the NFC transceiver 126, the processor 128 and the WLAN transceiver 124. These components can be integrated into one integrated electronic circuit chip 162 that is attached to the self-adhesive foil 160.

In addition, foil battery 164 can be attached to the self-adhesive foil 160 in order to provide a power supply to the integrated circuit 162.

Due to the self-adhesive foil 160 and the foil battery 164 the communication component 100 has a flat form with a maximal thickness of not more than 5 mm, such as below 4 mm or 3 mm. The self-adhesive foil 160 can be attached to an object carried by the user of the cellular phone 102 or to the cellular phone 102 itself.

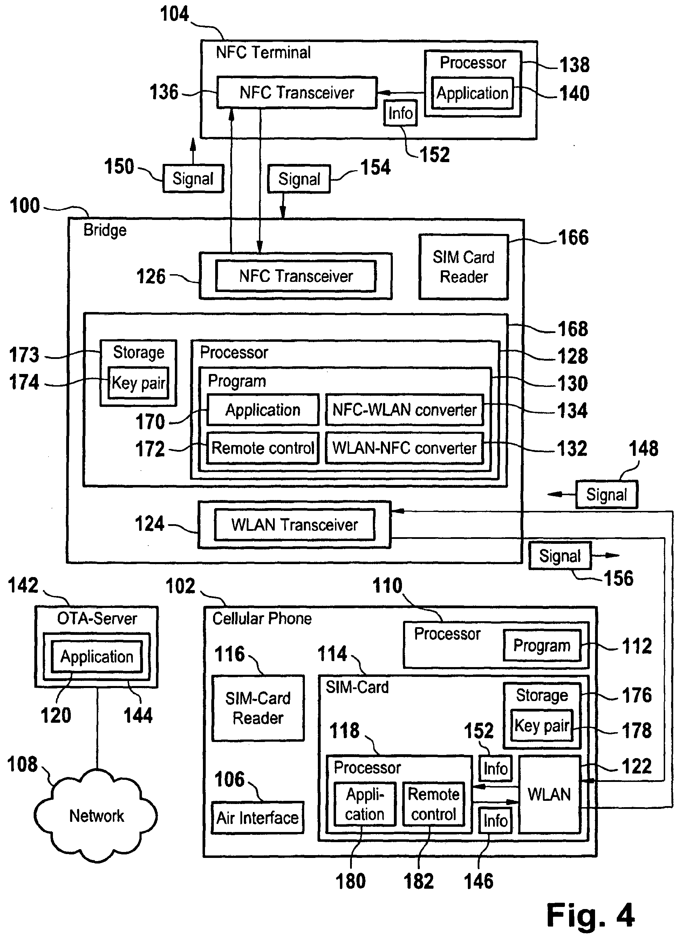

Fig. 4 shows a further embodiment of the communication component 100. In the embodiment considered here the communication component 100 comprises a reader for a security token, such as a SIM card reader 166, into which a security token, such as a SIM card 168, is inserted. The SIM card 168 comprises the processor 128 for execution of an application program module 170 and a remote control program module 172.

The processor 128 may also serve for implementation of the converters 132 and/or 134. Alternatively, the converters 132 and/or 134 are provided by an additional processor (not shown in the Fig.) of the communication component 100.

The SIM card 168 has storage 172 for storing a symmetric key or an asymmetric cryptographic key pair 174. The SIM card 168 can be a SWP SIM card providing a secure environment for execution of the application program module 170. For example, the SIM card 168 can be implemented as a tamper-proof module for protecting the application program module 170 and/or other functional components of the SIM card 168 against tampering or fraudulent manipulations.

The SIM card 168 can be implemented as a slave of the WLAN transceiver 124 through an ISO 7816 physical link or another link such as GPIO, I2C, SPI. Further, the SIM card 168 can be implemented as a master device through a single wire protocol (SWP) / host controller interface (HCI) link of the NFC transceiver 126.

In the embodiment considered here the SIM card 114 has storage 176 for storing at least one cryptographic key, such as a symmetric key matching a symmetric key being stored in the storage 173 or another asymmetric cryptographic key pair 178. The processor 118 of the SIM card 114 serves for execution of an application program module 180 and a remote control program module 182.

The application program modules 170 and 180 are interoperable as well as the remote control program modules 172 and 182. The remote control program module 172 is operable to receive a request from the application program module 170 which it forwards by means of WLAN transceiver 124 to the SIM card 114 such that the execution of the application program module 180 is invoked through the intermediary of the remote control program module 182. This enables to implement an application in a distributed way, such as by implementing a portion of the program logic in the application program module 170 and by implementing another portion of the program logic in the application program 180. This provides a higher degree of security against manipulations, in particular if the WLAN communication between the communication component 100 and the SIM card 114 is secured by means of the key pairs 174 and/or 178, such as by a secure messaging method.

Furthermore, this has the advantage of providing access of the application program module 170 to resources of the cellular phone 102, such as the display, keyboard and the air interface 106 for user interaction or sending a message, such as an SMS, via the air interface 106.

For example, the communication component 100 may implement various modes of operation:
**First mode:** in the first mode the communication component 100 interoperates with the NFC terminal 104 in an autonomous way from an applicative view as well as from a security point of view without involvement of the cellular phone 102. In this mode the application program module 170 exchanges the information with the application program 140 of the NFC terminal 104 through the NFC interface provided by the NFC transceivers 126 and 136 without involvement of the cellular phone 102. In this example it is advantageous if the component 100 is wirelessley powered by the NFC field generated by the NFC transceiver.
**Second mode:** in this mode the communication component 100 operates as a relay or bridge between the NFC terminal 104 and the SIM card 114 of the cellular phone 102 with or without involvement of the application program module 170. Depending on the implementation the application program module 170 is not executed in this mode; in this instance the communication component 100 may operate as described with respect to the Fig. 1 example.
**Third mode:** in this mode both the application program module 170 and the application program module 180 are executed. For example, the application program module 170 receives information 152 from the application program 140 that is executed by the processor 138 of the NFC terminal 104, i.e. the information 152 is received by the NFC transceiver 126. From the NFC transceiver 126 the information 152 is input into the SIM card 168 via the SIM card reader 166 for processing by the application program module 170. The application program module 170 may transform the information 152, add additional information to the information 152 and/or generate a request to be executed by the application program module 180 of the SIM card 114 using the information 152.

The information 152 as it may have been modified, amended or transformed by the application program module 170 is output by the SIM card 168 via the SIM card reader 166 and transmitted by means of the WLAN signal 156 to the SIM card 114. In addition, the request that is generated by the application program module 170 is entered into the remote control program module 172. In response to the request the remote control program module 172 starts a session, such as a SIM toolkit proactive session, that is forwarded to the SIM card 114 through the WLAN transceiver 124 via the SIM card reader 166. As a consequence the session started by the remote control program module 172 is executed by the SIM card 114 when the remote control program module receives a respective signal that indicates the session started by the remote control program module 172.

For example, the application program module 170 generates a request for sending an SMS or display a text message, such as for requesting a user to enter a personal identification number (PIN). This request is communicated through the intermediary of the remote control program module 172 and the remote control program module 180 to the SIM card 114 for execution, such that the requested SMS is sent out by the cellular phone 102 or the requested text message is displayed on a display of the cellular phone 102, such as for prompting a user to enter a PIN, respectively.

The response to this request, such as the PIN that has been entered by the user into the cellular phone 102, is communicated back to the SIM card 168 such as for authentication of the user vis-à-vis the SIM card 168. Preferably the PIN is encrypted using the public key of the key pair 174 and signed using the private key of the key pair 178 for protecting of the transmission of the PIN from the cellular phone 102 to the SIM card 168.

For example, the SIM card 168 is a SWP SIM card for execution of the contactless/secure application program module 170. The application program module 170 is a slave of the WLAN transceiver 124 with which it communicates via the SIM card reader 166 such as through an ISO 7816 physical link or another link such as GPIO, I2C or SPI. The application program module 170 may be a master of the NFC transceiver 126 with which it communicates through SWP/HCl (ETSI).

In accordance with an embodiment of the invention, the communication component 100 does not include a primary battery. Power is provided from the NFC terminal 104 to the communication component 100 by inductive coupling using the NFC interface. In particular, a carrier wave sent out by the NFC transceiver 136 can be used both for sending the signal 154 and for powering the communication component 100. That power which is inductively coupled into the communication component 100 is used for powering the various functional components of the communication component 100, such as the WLAN transceiver 124 and through the SIM card reader 166 also the SIM card 168.

**List of Reference Numerals**

| | |
|---|---|
| 100 | Communication component |
| 102 | Cellular phone |
| 104 | NFC terminal |
| 106 | Air interface |
| 108 | Network |
| 110 | Processor |
| 112 | Program instructions |
| 114 | SIM card |
| 116 | SIM card reader |
| 118 | Processor |
| 120 | Application program |
| 122 | WLAN transceiver |
| 124 | WLAN transceiver |
| 126 | NFC transceiver |
| 128 | Processor |
| 130 | Program instructions |
| 132 | Converter |
| 134 | Converter |
| 136 | NFC transceiver |
| 138 | Processor |
| 140 | Application program |
| 142 | OTA-server |
| 144 | Storage |
| 146 | Information |
| 148 | WLAN signal |
| 150 | NFC signal |
| 152 | Information |
| 154 | NFC signal |
| 156 | WLAN signal |
| 158 | Keyring pendant |
| 160 | Foil |
| 162 | Integrated circuit |
| 164 | Foil battery |
| 166 | SIM card reader |
| 168 | SIM card |
| 170 | Application program module |
| 172 | Remote control program module |
| 173 | Storage |
| 174 | Key pair |
| 176 | Storage |
| 178 | Key pair |
| 180 | Application program module |
| 182 | Remote control program module |
| 184 | WLAN antenna |
| 186 | NFC antenna |
| 188 | WLAN antenna |

## Claims

1. A communication component comprising:
- a far field transceiver (124) for exchanging far field signals with a cellular mobile telecommunication device (102), the far field transceiver being a WLAN transceiver for exchanging WLAN signals,
- an NFC transceiver (126) for exchanging NFC signals and for powering the communication component, the NFC transceiver (126) being operable to exchange the NFC signals (150, 154) with the NFC terminal
- converter means (132, 134) for converting a received far field signal (148) to an NFC signal (150) and for converting a received NFC signal (154) to a far field signal (156),
**characterised in that**, the communication component further comprises
a reader (166) into which a security token, such as a SIM card (168), is inserted, the security token having a storage (172) for storing a symmetric key or an asymmetric cryptographic key pair (174) for authentication and encryption of the communication between the communication component and the cellular mobile telecommunication device and the NFC terminal.

2. The communication component of claim 1 being a sticker.

3. The communication component of claim 2, further comprising a self-adhesive foil (160) carrying the far field transceiver, the NFC transceiver, the converter means and a battery.

4. The communication component of claim 3, the battery being a foil battery (164).

5. The communication component of any one of the preceding claims being a keyring pendant.

6. The communication component of any one of the preceding claims, further comprising processor means (128) for execution of application program instructions (170) and remote control means (172) for remotely interacting with a SIM card (118) through the WLAN transceiver (124).

7. A wireless communication system comprising:
- a cellular mobile telecommunication device (102) having an integrated chip card reader (116),
- a telecommunication chip card (114) for insertion into the chip card reader, the telecommunication chip card having an integrated far field transceiver (122), the far field transceiver being a WLAN transceiver,
- an NFC terminal (104),
- a communication component (100) comprising:
∘ a far field transceiver (124) for exchanging far field signals, the far field transceiver being a WLAN transceiver for exchanging WLAN signals,
∘ an NFC transceiver (126) for exchanging NFC signals and for powering the communication component,
∘ converter means (132, 134) for converting a received far field signal (148) to an NFC signal (150) and for converting a received NFC signal (154) to a far field signal (156); the NFC transceiver (126) of the communication component being operable to exchange the NFC signals (150, 154) with the NFC terminal, the far field transceiver (124) of the communication component being operable to exchange the far field signals (148, 156) with the integrated far field transceiver (122) of the telecommunication chip card
**characterised in that** the communication component further comprises a reader (166) into which a security token, such as a SIM card (168), is inserted, the security token having a storage (172) for storing a symmetric key or an asymmetric cryptographic key pair (174) for authentication and encryption of the communication between the communication component and the cellular mobile telecommunication device and the NFC terminal.

8. The wireless communication system of claim 7, the telecommunication chip card comprising an application program (118), the application program being operable to exchange information (146, 152) with the NFC terminal (104) using the integrated far field transceiver (122) of the telecommunication chip card and the communication component (100).

9. The wireless communication system of any of claims 7 to 8, the communication component (100) comprising processor means (128) for execution of a first application program module (170) and first remote control means (172), the telecommunication chip card (114) comprising processor means (118) for execution of a second application program module (180) and second remote control means (182), the first and second application program modules being interoperable through the first and second remote control means, wherein the first application program module is operable to enter a request into the second application program module using the first remote control means for sending the request by means of the far field transceiver (124), such that the request that is received by the integrated far field transceiver (122) of the telecommunication chip card is entered into the second application program module by the second remote control means.

10. The wireless communication system of any one of claims 7to 9, the cellular mobile telecommunication device having a cellular transceiver (106) for coupling the cellular mobile telecommunication device to a cellular digital mobile telecommunication network (108), the cellular transceiver being operable to receive the application program (120) and the cellular mobile telecommunication device being operable to store the application program (120) on the telecommunication chip card (114).

11. The wireless communication system of claim 10, further comprising an OTA-server (142) being coupled to the digital mobile telecommunication network for sending the application program to the cellular mobile telecommunication device.

12. The wireless communication system of any one of claims 7 to 9, the NFC terminal constituting a power supply for the communication component.

13. A communication method for coupling a cellular mobile telecommunication device (102) to an NFC terminal (104) using a communication component (100) in accordance with any one of the preceding claims 1 to 3, the method comprising the steps of:
- providing a power to the communication component (100) by inductive coupling using the NFC transceiver (126),
- receiving a first far field signal (148) carrying first information (146) from the integrated far field transceiver (122) of the telecommunication chip card (114) of the cellular mobile telecommunication device by the communication component,
- generating a first NFC signal (150) carrying the first information and sending the first NFC signal from the NFC transceiver (126) of the communication component to the NFC terminal,
- receiving a second NFC signal (154) from the NFC terminal by the NFC transceiver of the communication component, the second NFC signal carrying a second information (152),
- generating a second far field signal (156) carrying the second information and sending the second far field signal from the communication component to the integrated far field transceiver of the telecommunication chip card
**characterised in that** the method further comprising
- providing a reader (166) into which a security token, such as a SIM card (168), is inserted, the security token having a storage (172) for storing a symmetric key or an asymmetric cryptographic key pair (174),
- authenticating and encrypting the communication between the communication component and the cellular mobile telecommunication device and the NFC terminal using the symmetric key or the asymmetric cryptographic key pair.

## Patentansprüche

1. Kommunikationskomponente, umfassend:
- einen Fernfeld-Transceiver (124) zum Austauschen von Fernfeldsignalen mit einer zellulären Mobiltelekommunikationsvorrichtung (102), wobei der Fernfeld-Transceiver ein WLAN-Transceiver zum Austauschen von WLAN-Signalen ist,
- einen NFC-Transceiver (126) zum Austauschen von NFC-Signalen und zum Versorgen der Kommunikationskomponente mit Energie, wobei der NFC-Transceiver (126) dazu dient, die NFC-Signale (150, 154) mit dem NFC-Endgerät auszutauschen,
- eine Wandeleinrichtung (132, 134) zum Umwandeln eines empfangenen Fernfeldsignals (148) in ein NFC-Signal (150) und zum Umwandeln eines empfangenen NFC-Signals (154) in ein Fernfeldsignal (156),
**dadurch gekennzeichnet, dass** die Kommunikationskomponente ferner umfasst:
einen Leser (166), in den ein Sicherheits-Token, beispielsweise eine SIM-Karte (168) eingeführt wird, wobei der Sicherheits-Token einen Speicher (172) aufweist zum Speichern eines symmetrischen Schlüssels oder eines asymmetrischen kryptographischen Schlüsselpaars (174) zur Authentifizierung und Verschlüsselung der Kommunikation zwischen der Kommunikationskomponente und der zellulären mobilen Telekommunikationsvorrichtung und dem NFC-Endgerät.

2. Kommunikationskomponente nach Anspruch 1, die ein Sticker ist.

3. Kommunikationskomponente nach Anspruch 2, ferner eine selbstklebende Folie (160) umfassend, die den Fernfeld-Transceiver, den NFC-Transceiver, die Wandeleinrichtung und eine Batterie trägt.

4. Kommunikationskomponente nach Anspruch 3, wobei die Batterie eine Folienbatterie (164) ist.

5. Kommunikationskomponente nach einem der vorangehenden Ansprüche, die ein Schlüsselanhänger ist.

6. Kommunikationsvorrichtung nach einem der vorangehenden Ansprüche, ferner eine Rechnereinrichtung (128) zur Ausführung von Anwendungsprogrammbefehlen (170) und eine Fernsteuerungseinrichtung (172) zur Fern-Interaktion mit einer SIM-Karte (118) über den WLAN-Transceiver (124) aufweisend.

7. Drahtloskommunikationssystem, umfassend:
- eine zelluläre Mobiltelekommunikationsvorrichtung (102) mit einem integrierten Chipkartenleser (116),
- eine Telekommunikations-Chipkarte (114) zur Einführung in den Chipkartenleser, wobei die Telekommunikations-Chipkarte einen integrierten Fernfeld-Transceiver (122) aufweist, wobei der Fernfeld-Transceiver ein WLAN-Transceiver ist,
- ein NFC-Endgerät (104),
- eine Kommunikationskomponente (100), umfassend:
∘ einen Fernfeld-Transceiver (124) zum Austauschen von Fernfeldsignalen, wobei der Fernfeld-Transceiver ein WLAN-Transceiver zum Austauschen von WLAN-Signalen ist,
∘ einen NFC-Transceiver (126) zum Austauschen von NFC-Signalen und zum Versorgen der Kommunikationskomponente mit Energie,
∘ eine Wandeleinrichtung (132, 134) zum Umwandeln eines empfangenen Fernfeldsignals (148) in ein NFC-Signal (150) und zum Umwandeln eines empfangenen NFC-Signals (154) in ein Fernfeldsignal (156), wobei der NFC-Transceiver (126) der Kommunikationskomponente dazu dient, die NFC-Signale (150, 154) mit dem NFC-Endgerät auszutauschen, wobei der Fernfeldempfänger (124) der Kommunikationskomponente in der Lage ist, die Fernfeldsignale (148, 156) mit dem integrierten Fernfeld-Transceiver (122) der Telekommunikations-Chipkarte auszutauschen,
**dadurch gekennzeichnet, dass** die Kommunikationskomponente ferner umfasst:
einen Leser, in den ein Sicherheits-Token, beispielsweise eine SIM-Karte (168) eingeführt wird, wobei der Sicherheits-Token einen Speicher (172) zum Speichern eines symmetrischen Schlüssels oder eines asymmetrischen kryptographischen Schlüsselpaars (174) zur Authentifizierung und Verschlüsselung der Kommunikation zwischen der Kommunikationskomponente und der zellulären Mobiltelekommunikationsvorrichtung umfasst.

8. Drahtloses Kommunikationssystem nach Anspruch 7, wobei die Telekommunikations-Chipkarte ein Anwendungsprogramm (118) umfasst, wobei das Anwendungsprogramm dazu dient, Informationen (140, 152) mit dem NFC-Endgerät (104) unter Verwendung des integrierten Fernfeld-Transceivers (122) der Telekommunikations-Chipkarte und der Kommunikationskomponente (100) auszutauschen.

9. Drahtloses Kommunikationssystem nach einem der Ansprüche 7 bis 8, wobei die Kommunikationskomponente (100) eine Rechnereinrichtung (128) zur Ausführung eines ersten Anwendungsprogrammmoduls (170) und eine erste Fernsteuerungseinrichtung (172) umfasst, wobei die Telekommunikations-Chipkarte (114) eine Rechnereinrichtung (118) zur Ausführung eines zweiten Anwendungsprogrammmoduls (180) und eine zweite Fernsteuerungseinrichtung (182) umfasst, wobei das erste und das zweite Anwendungsprogrammmodul über die erste und die zweite Fernsteuereinrichtungen (182) interagieren können, wobei das erste Anwendungsprogrammmodul dazu dient, unter Verwendung der ersten Fernsteuereinrichtung eine Anfrage in das zweite Anwendungsprogrammmodul zum Senden der Anforderung mittels des Fernfeld-Transceivers (124) einzugeben, so dass die Anfrage, die vom integrierten Fernfeld-Transceiver (122) der Telekommunikations-Chipkarte empfangen wird, von der zweiten Fernsteuerungseinrichtung in das zweite Anwendungsprogrammmodul eingegeben wird.

10. Drahtloses Kommunikationssystem nach einem der Ansprüche 7 bis 9, wobei die zelluläre Mobiltelekommunikationsvorrichtung einen zellulären Transceiver (106) zum Koppeln der zellulären Mobiltelekommunikationsvorrichtung mit einem zellulären digitalen Mobilkommunikationsnetz (108) aufweist, wobei der zelluläre Transceiver dazu dient, das Anwendungsprogramm (120) zu empfangen, und die zelluläre Telekommunikationsvorrichtung dazu dient, das Anwendungsprogramm (120) auf der Telekommunikations-Chipkarte (114) zu speichern.

11. Drahtloses Kommunikationssystem nach Anspruch 10, ferner einen OTA-Server (142) umfassend, der mit dem digitalen Mobiltelekommunikationsnetz gekoppelt ist, um das Anwendungsprogramm zur zellulären Mobiltelekommunikationsvorrichtung zu senden.

12. Drahtloses Kommunikationssystem nach einem der Ansprüche 7 bis 9, wobei das NFC-Endgerät eine Leistungsquelle für die Kommunikationskomponente darstellt.

13. Kommunikationsverfahren zum Koppeln einer zellulären Mobiltelekommunikationsvorrichtung (102) mit einem NFC-Endgerät (104) unter Verwendung einer Kommunikationskomponente (100) nach einem der vorangehenden Ansprüche 1 bis 3, wobei das Verfahren die folgenden Schritte umfasst:
- Bereitstellen von Leistung für die Kommunikationskomponente (100) durch induktives Koppeln unter Verwendung des NFC-Transceivers (126),
- Empfangen eines ersten Fernfeldsignals (148), das erste Informationen (146) vom integrierten Fernfeld-Transceivers (122) der Telekommunikations-Chipkarte (114) der zellulären Mobiltelekommunikationsvorrichtung trägt, durch die Kommunikationskomponente,
- Erzeugen eines ersten NFC-Signals (150), das die ersten Informationen trägt, und Senden des ersten NFC-Signals vom NFC-Transceiver (126) der Kommunikationskomponente zum NFC-Endgerät,
- Empfangen eines zweiten NFC-Signals (154) vom NFC-Endgerät der Kommunikationskomponente, wobei das zweite NFC-Signal zweite Informationen (152) trägt,
- Erzeugen eines zweiten Fernfeldsignals (156), das die zweiten Informationen trägt, und Senden des zweiten Fernfeldsignals von der Kommunikationskomponente zum integrierten Fernfeld-Transceiver der Telekommunikations-Chipkarte, **dadurch gekennzeichnet, dass** das Verfahren ferner umfasst:
- Bereitstellen eines Lesers, in den ein Sicherheits-Token, beispielsweise eine SIM-Karte, eingeführt wird, wobei der Sicherheits-Token einen Speicher (172) zum Speichern eines symmetrischen Schlüssels oder eines asymmetrischen kryptographischen Schlüsselpaars (174) aufweist,
- Authentifizieren und Verschlüsseln der Kommunikation zwischen der Kommunikationskomponente und der zellulären Mobiltelekommunikationsvorrichtung und dem NFC-Endgerät unter Verwendung des symmetrischen Schlüssels oder des asymmetrischen kryptographische Schlüsselpaars.

## Revendications

1. Composant de communication comprenant :
- un émetteur-récepteur de champ lointain (124) pour échanger des signaux de champ lointain avec un dispositif cellulaire de télécommunication mobile (102), l'émetteur-récepteur de champ lointain étant un émetteur-récepteur WLAN pour échanger des signaux WLAN,
- un émetteur-récepteur NFC (126) pour échanger des signaux NFC et pour alimenter le composant de communication, l'émetteur-récepteur NFC (126) étant utilisable pour échanger les signaux NFC (150, 154) avec le terminal NFC,
- des moyens de conversion (132, 134) pour convertir un signal de champ lointain reçu (148) en un signal NFC (150) et pour convertir un signal NFC reçu (154) en un signal de champ lointain (156),
**caractérisé en ce que** le composant de communication comprend en outre un lecteur (166) dans lequel un jeton d'authentification, tel qu'une carte SIM (168), est inséré, le jeton d'authentification disposant d'un stockage (172) pour stocker une paire de clés cryptographiques (174) symétriques ou asymétriques pour l'authentification et le chiffrement de la communication entre le composant de communication et le dispositif cellulaire de télécommunication mobile et le terminal NFC.

2. Composant de communication selon la revendication 1, qui est un autocollant.

3. Composant de communication selon la revendication 2, qui comprend en outre une feuille auto-adhésive (160) supportant l'émetteur-récepteur de champ lointain, l'émetteur-récepteur NFC, les moyens de conversion et une batterie.

4. Composant de communication selon la revendication 3, la batterie étant une batterie en feuille (164).

5. Composant de communication selon l'une quelconque des revendications précédentes, qui est un pendentif de clé.

6. Composant de communication selon l'une quelconque des revendications précédentes, comprenant en outre des moyens en processeurs (128) pour des instructions de programme d'application ou d'exécution (170) et des moyens de contrôle à distance (172) pour interagir à distance avec une carte SIM (118) par le biais de l'émetteur-récepteur WLAN (124).

7. Système de communication sans fil comprenant :
- un dispositif cellulaire de télécommunication mobile (102) avec un lecteur de carte à puce intégré (116),
- une carte à puce de télécommunication (114) destinée à être insérée dans le lecteur de carte à puce, la carte à puce de télécommunication ayant un émetteur-récepteur de champ lointain intégré (122), l'émetteur-récepteur de champ lointain étant un émetteur-récepteur WLAN,
- un terminal NFC (104),
- un composant de communication (100) comprenant :
- un émetteur-récepteur de champ lointain (124) pour l'échange de signaux de champ lointain, l'émetteur-récepteur de champ lointain étant un émetteur-récepteur WLAN pour l'échange de signaux WLAN,
- un émetteur-récepteur NFC (126) pour l'échange de signaux NFC et pour l'alimentation du composant de communication,
- des moyens de conversion (132, 134) pour la conversion d'un signal de champ lointain (148) reçu en un signal NFC (150) et pour la conversion d'un signal NFC reçu (154) en un signal de champ lointain (156), l'émetteur-récepteur NFC (126) du composant de communication étant utilisable pour l'échange des signaux NFC (150, 154) avec le terminal NFC, l'émetteur-récepteur de champ lointain (124) du composant de communication étant utilisable pour l'échange des signaux de champ lointain (148, 156) avec l'émetteur-récepteur intégré (122) de la carte à puce de télécommunication,
**caractérisé en ce que** le composant de communication comprend en outre un lecteur (166) dans lequel un jeton d'authentification, tel qu'une carte SIM (168), est inséré, le jeton d'authentification disposant d'un stockage (172) pour stocker une paire de clés cryptographiques (174) symétriques ou asymétriques pour l'authentification et le chiffrement de la communication entre le composant de communication et le dispositif cellulaire de télécommunication mobile et le terminal NFC.

8. Système de communication sans fil selon la revendication 7, la carte à puce de télécommunication comprenant un programme d'application (118), le programme d'application étant utilisable pour l'échange d'informations (146, 152) avec le terminal NFC (104) en utilisant l'émetteur-récepteur de champ lointain intégré (122) de la carte à puce de télécommunication et le composant de communication (100).

9. Système de communication sans fil selon l'une quelconque des revendications 7 à 8, le composant de communication (100) comprenant des moyens en processeurs (128) pour l'exécution d'un premier module d'un programme d'application (170) et des moyens d'un premier contrôle à distance (172), la carte à puce de télécommunication (114) comprenant des moyens en processeurs (118) pour l'exécution d'un second module d'un programme d'application (180) et des moyens d'un second contrôle à distance (182), les premier et second modules du programme d'application étant interopérables par les moyens des premier et second contrôles à distance, où le premier module du programme d'application est utilisable pour entrer une requête dans le second module du programme d'application en utilisant les moyens du premier contrôle à distance pour envoyer la requête au moyen de l'émetteur-récepteur de champ lointain (124), de telle sorte que la requête qui est reçue par l'émetteur-récepteur de champ lointain intégré (122) de la carte à puce de télécommunication est entrée dans le second module du programme d'application par les moyens du second contrôle à distance.

10. Système de communication sans fil selon l'une quelconque des revendications 7 à 9, le dispositif cellulaire de télécommunication mobile ayant un émetteur-récepteur cellulaire (106) pour associer le dispositif cellulaire de télécommunication mobile à un réseau cellulaire digital de télécommunication mobile (108), l'émetteur-récepteur cellulaire étant utilisable pour recevoir le programme d'application (120) et le dispositif cellulaire de télécommunication mobile étant utilisable pour stocker le programme d'application (120) sur la carte à puce de télécommunication (114).

11. Système de communication sans fil selon la revendication 10, comprenant en outre un serveur OTA (142) étant associé au réseau digital de télécommunication mobile pour envoyer le programme d'application vers le dispositif cellulaire de télécommunication mobile.

12. Système de communication sans fil selon l'une quelconque des revendications 7 à 9, le terminal NFC constituant une alimentation électrique pour le composant de communication.

13. Procédé de communication pour associer un dispositif cellulaire de télécommunication mobile (102) à un terminal NFC (104) en utilisant un composant de communication (100) conformément à l'une quelconque des revendications 1 à 3 précédentes, le procédé comprenant les étapes de :
- fourniture de l'électricité au composant de communication (100) par un couplage par induction en utilisant l'émetteur-récepteur NFC (126),
- réception d'un premier signal de champ lointain (148) transportant une première information (146) en provenance de l'émetteur-récepteur de champ lointain intégré (122) de la carte à puce de télécommunication (114) du dispositif cellulaire de télécommunication mobile par le composant de communication,
- création d'un premier signal NFC (150) transportant la première information et envoi du premier signal NFC à partir de l'émetteur-récepteur NFC (126) du composant de communication vers le terminal NFC,
- réception d'un second signal NFC (154) en provenance du terminal NFC par l'émetteur-récepteur NFC du composant de communication, le second signal NFC transportant une seconde information (152),
- création d'un second signal de champ lointain (156) transportant la seconde information et envoi du second signal de champ lointain à partir du composant de communication vers l'émetteur-récepteur de champ lointain intégré de la carte à puce de télécommunication **caractérisé en ce que** le procédé comprenant en outre
- la mise à disposition d'un lecteur (166) dans lequel un jeton d'authentification, tel qu'une carte SIM (168), est inséré, le jeton d'authentification disposant d'un stockage (172) pour stocker une paire de clés cryptographiques (174) symétriques ou asymétriques,
- l'authentification et le chiffrement de la communication entre le composant de communication et le dispositif cellulaire de télécommunication mobile et le terminal NFC en utilisant la paire de clés cryptographiques symétriques ou la paire de clés cryptographiques asymétriques.
